# EUROPEAN PATENT APPLICATION

(11) **EP 4 756 784 A1**
(43) Date of publication of application: **10.06.2026**
(21) Application number: 24848982.5
(22) Date of filing: 22.07.2024
(51) Int. Cl.: G09F 9/00, B32B 7/023, B32B 9/00, B32B 27/00, G02B 5/02, G02F 1/153, G02F 1/1333, G02F 1/16756

(54) **OPTICAL LAMINATE FOR DISPLAY DEVICE AND DISPLAY DEVICE USING SAME**

(30) Priority: 28.07.2023 JP 2023123617; 27.12.2023 JP 2023220444; 16.04.2024 JP 2024065956
(71) Applicant: Dai Nippon Printing Co., Ltd., Tokyo 162-8001 (JP)
(72) Inventor: SAKAMOTO, Takeshi, Tokyo 162-8001 (JP); KUDO, Takuma, Tokyo 162-8001 (JP); YAMANISHI, Shota, Tokyo 162-8001 (JP); HARUKI, Akihito, Tokyo 162-8001 (JP); IWAHASHI, Hiroyuki, Tokyo 162-8001 (JP)
(74) Representative: Beck Greener LLP
(86) International application number: PCT/JP2024/026157
(87) International publication number: WO 2025/028327

(57) **Abstract**

Provided is an optical laminate for a display device that can prevent poor display quality of the display device when the barrier property is enhanced using silicon oxide. An optical laminate for a display device, comprising: a barrier film comprising a first base material and an inorganic oxide layer on the first base material; and a second base material, wherein the barrier film and the second base material are laminated via an adhesive layer present between the first base material side of the barrier film and the second base material, the inorganic oxide layer comprises silicon oxide and has a thickness of 30 nm or more, a haze of the second base material and a haze of the barrier film satisfies the relationship of the haze of the second base material ≤ the haze of the barrier film, and a thickness of the barrier film and a thickness of the second base material satisfies the relationship of the thickness of the barrier film ≤ the thickness of the second base material.

## Description

### Technical Field

The present disclosure relates to an optical laminate for a display device and a display device using the optical laminate for a display device.

### Background Art

Since electronic paper consumes power only when rewriting information and can maintain display even after the supply of power is stopped, the consumption of power can be suppressed compared with a liquid crystal display device and an organic EL display device. In addition, electronic paper has excellent characteristics such as "excellent flexibility" and "thin and light".

The electronic paper is composed of, for example, a back electrode base material having a back base material and a back electrode, a transparent electrode base material having a transparent base material and a transparent electrode, and a display medium layer disposed between the back electrode base material and the transparent electrode base material.

The display medium layer of the electronic paper has, for example, a configuration in which a dye is dispersed in a filling liquid. The electronic paper can rewrite information displayed on the electronic paper by disposing a desired dye in the display medium layer on the observer side by voltage control. The information-rewriting performance of the display medium layer is easily degraded by volatilization of the filling liquid or moisture intrusion from the outside air. In addition, a plastic film is often used for at least one of the back base material and the transparent base material in order to make the electronic paper thinner, lighter, and more flexible. The plastic film has a lower barrier property than glass. Accordingly, a plastic film having an enhanced barrier property is required.

A plastic film with an enhanced barrier property may also be required for a display device other than electronic paper, such as an organic EL display device and a liquid crystal display device including a wavelength conversion sheet.

Therefore, an optical laminate in which a layer having a good barrier property is formed on a plastic film has been developed. Optical laminates for electronic paper have been proposed in, for example, PTLs 1 to 4.

### Citation List

### Patent Literature

PTL1: JP 2019-89311 A
PTL2: JP 2018-180212 A
PTL3: WO 2017/130617
PTL4: JP 2014-148584 A

### Summary of Invention

### Technical Problem

An optical laminate for a display device such as electronic paper is required to have advanced barrier properties and optical characteristics. In particular, the requirements for optical characteristics have become more severe in recent years since the electronic paper is increasingly colored from a black-and-white two-color system. In order to achieve advanced barrier properties and optical characteristics, the present inventors have examined the use of silicon oxide as a material for a barrier layer of the optical laminate for a display device such as electronic paper, and also thickening the barrier layer containing silicon oxide.

However, when the thickness of the barrier layer containing silicon oxide is increased, minute black dots may be visually observed in the plane of the optical laminate. The clearly visible minute black dots lead to poor display quality of a display device such as electronic paper.

PTLs 1 to 4 do not consider the problem caused when the barrier property is enhanced by using silicon oxide.

It is an object of the present disclosure to provide an optical laminate for a display device that can prevent poor display quality of a display device such as electronic paper when the barrier property is enhanced by using silicon oxide. It is another object of the present disclosure to provide a display device including the optical laminate for a display device.

### Solution to Problem

The present disclosure provides the following <1> and <2>.
<1> An optical laminate for a display device, comprising: a barrier film comprising a first base material and an inorganic oxide layer on the first base material; and a second base material, wherein
   the barrier film and the second base material are laminated via an adhesive layer present between the first base material side of the barrier film and the second base material,
   the inorganic oxide layer comprises silicon oxide and has a thickness of 30 nm or more,
   a haze of the second base material and a haze of the barrier film satisfies the relationship of the haze of the second base material ≤ the haze of the barrier film, and
   a thickness of the barrier film and a thickness of the second base material satisfies the relationship of the thickness of the barrier film ≤ the thickness of the second base material.
<2> A display device comprising the optical laminate for a display device according to <1>.

### Advantageous Effects of Invention

The optical laminate for a display device and a display device including the optical laminate for a display device according to the present disclosure can prevent poor display quality.

### Brief Description of Drawings

[Fig. 1] Fig. 1 is a cross-sectional view showing one embodiment of the optical laminate for a display device according to the present disclosure.
[Fig. 2] Fig. 2 is a cross-sectional view showing one embodiment of the electronic paper of the present disclosure.

### Description of Embodiments

Hereinafter, embodiments of the present disclosure will be described.

In this specification, the haze means the haze according to JIS K 7136:2000. In this specification, the expression "AA to BB" means AA or more and BB or less. In this specification, the "optical laminate for a display device" may be simply referred to as an "optical laminate."

### [Optical laminate for a display device]

The optical laminate for a display device according to the present disclosure is an optical laminate comprising: a barrier film comprising a first base material and an inorganic oxide layer on the first base material; and a second base material, wherein
the barrier film and the second base material are laminated via an adhesive layer present between the first base material side of the barrier film and the second base material,
the inorganic oxide layer comprises silicon oxide and has a thickness of 30 nm or more,
a haze of the second base material and a haze of the barrier film satisfies the relationship of the haze of the second base material ≤ the haze of the barrier film, and
a thickness of the barrier film and a thickness of the second base material satisfies the relationship of the thickness of the barrier film ≤ the thickness of the second base material.

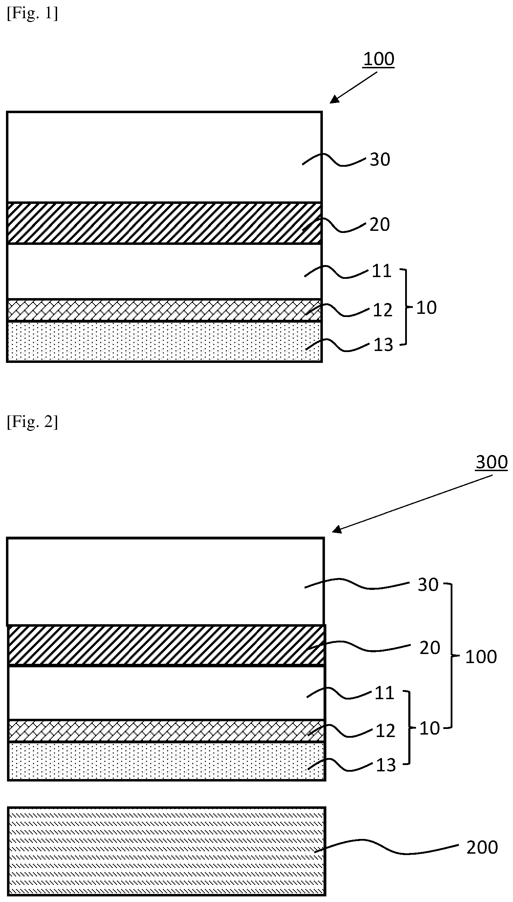

Fig. 1 is a cross-sectional view showing one embodiment of an optical laminate 100 of the present disclosure. The optical laminate 100 of Fig. 1 includes: a barrier film 10 having a first base material 11 and an inorganic oxide layer 12 on the first base material 11; and a second base material 30. In the optical laminate 100 of Fig. 1, the barrier film 10 and the second base material 30 are laminated via an adhesive layer 20 present between the first base material side of the barrier film and the second base material. In Fig. 1, the barrier film 10 has the inorganic oxide layer 12 on the first base material 11 and further has a covering layer 13 on the inorganic oxide layer 12.

Fig. 1 is a schematic cross-sectional view. That is, in Fig. 1, the scale and the like of each layer constituting the optical laminate 100 are schematized for the sake of illustration and are different from the actual scale and the like. The same applies to Fig. 2.

### <Characteristics of optical laminate of present disclosure>

The main characteristics of the optical laminate of the present disclosure comprise the following requirements (1) to (3).
(1) An inorganic oxide layer includes silicon oxide and has a thickness of 30 nm or more.
(2) The relationship of the haze of the second base material ≤ the haze of the barrier film is satisfied.
(3) The relationship of the thickness of the barrier film ≤ the thickness of the second base material is satisfied.

Hereinafter, description will be made about a technical concept that poor display quality of a display device such as electronic paper can be prevented by the requirements (1) to (3).

As described in (1) above, the inorganic oxide layer of the optical laminate of the present disclosure includes silicon oxide and has a thickness of 30 nm or more. An increase in the price of the optical laminate may be suppressed by using silicon oxide as the inorganic oxide constituting the inorganic oxide layer. A thickness of the inorganic oxide of 30 nm or more can impart an advanced barrier property to the optical laminate.

However, when the thickness of the inorganic oxide layer containing silicon oxide is increased, the b* value of the L*a*b* color system of the inorganic oxide layer tends to increase due to the silicon oxide. In addition, when the inorganic oxide layer is formed by a vacuum vapor deposition method or the like, minute black dots may be visually observed in the inorganic oxide layer. For example, in the inorganic oxide layer formed by a vacuum vapor deposition method, minute black dots are formed due to a splash phenomenon. The minute black dots are partial defects at the time of film formation. Accordingly, the longer the film formation time is, the more easily the minute black spots are generated in the plane of the optical laminate. In other words, the greater the thickness of the inorganic oxide layer is, the more likely minute black dots are to be generated in the plane of the optical laminate. It is difficult to completely eliminate the minute black dots. For example, a reduction of the splash phenomenon in the vapor deposition has been studied previously, but the splash phenomenon cannot be completely eliminated even at the time of the present application filed.

On the other hand, even when minute black dots are generated in the optical laminate, the barrier property may be maintained at an acceptable level (it is considered that since the thickness of the inorganic oxide layer is 30 nm or more, the barrier property may be maintained at a predetermined level even when a defect occurs in a part in the thickness direction. Alternatively, it is considered that the barrier property may be maintained at a predetermined level by filling the defect with a covering layer formed on the inorganic oxide layer). In order to improve the yield, it is conceivable to use an optical laminate having minute black dots as a non-defective product. However, as described above, when the thickness of the inorganic oxide layer containing silicon oxide is increased, the b* value of the L*a*b* color system is increased due to the silicon oxide, and the optical laminate is thus yellowish. In addition, the above-described minute black dots are likely to stand out against a background color in which a yellow tint of silicon oxide is added to the screen of a display device such as electronic paper that displays white. In particular, since the electronic paper has a large proportion of portions that display white, the problem of conspicuous minute black dots is likely to occur.

As described above, the requirement (1) is advantageous in that it is easy to realize a low price and an advanced barrier property, but it causes the poor display quality of a display device such as electronic paper due to the presence of minute black dots. However, the optical laminate of the present disclosure prevents the poor display quality of a display device such as electronic paper by the requirements (2) and (3).

Hereinafter, description will be made about the reason why the poor display quality of a display device such as electronic paper can be prevented by further satisfying the above requirements (2) and (3).

In a display device such as electronic paper, a barrier layer such as an inorganic oxide layer is preferably disposed close to a display element such as a display element for electronic paper. Then, the optical laminate of the present disclosure is preferably disposed such that the barrier film is closer to the display element than the second base material. When the optical laminate of the present disclosure is disposed as described above, the barrier film is farther away from the viewer than the second base material. Both the haze of the second base material and the haze of the barrier film exert the effect of making minute black dots less visible, and the effect is more highly exerted by a member at a position farther away from the viewer. Accordingly, the requirement (2) is important to make the minute black dots less visible. The inorganic oxide layer and the covering layer described later each have an extremely low haze value. Therefore, it can be said that the haze of the barrier film is substantially the haze of the first base material.

The light diffused due to the haze of the barrier film is further diffused according to the thickness of the second base material. Accordingly, by satisfying the requirement (2) and the requirement (3), it is possible to make minute black dots less visible. On the other hand, when the requirement (2) is satisfied with the requirement (3) not satisfied, the diffusion of light according to the thickness of the second base material is insufficient, and thus the minute black dots are easily recognized.

As described above, the requirements (2) and (3) above can make minute black dots less visible, and thus the poor display quality of a display device such as electronic paper can be easily prevented.

In order to more easily prevent the poor display quality of a display device such as electronic paper according to the requirements (1) to (3), the following requirements (2') and (3') are preferably further provided.
(2') The following relationship is satisfied: the haze of the second base material < the haze of the barrier film.
(3') The following relationship is satisfied: the thickness of the barrier film < the thickness of the second base material.

### <Barrier film>

The barrier film is required to have an inorganic oxide layer on the first base material. The barrier film preferably further has a covering layer on the inorganic oxide layer. That is, the barrier film preferably has an inorganic oxide layer and a covering layer on the first base material. In the barrier film, each of the inorganic oxide layer and the covering layer is preferably a single layer.

### <<First base material>>

Examples of the first base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, and an amorphous olefin.

Among these resin films, a stretched polyester film is preferable, and a biaxially stretched polyester film is more preferable, in view of mechanical strength, dimensional stability, and heat resistance. Examples of the polyester film include a polyethylene terephthalate film and a polyethylene naphthalate film.

The thickness of the first base material is preferably 5.0 µm or more, more preferably 8.0 µm or more, and further preferably 12.0 µm or more. The thickness of the first base material is preferably 75.0 µm or less, more preferably 50.0 µm or less, and further preferably 40.0 µm or less.

When a plurality of upper limit options and a plurality of lower limit options of a numerical value are disclosed for a constitutional requirement shown herein, these options are intended to disclose embodiments of a range that are each composed by combining one selected from the upper limit options and one selected from the lower limit options. Examples of the embodiment of a range of the thickness of the first base material include 5.0 µm or more and 75.0 µm or less, 5.0 µm or more and 50.0 µm or less, 5.0 µm or more and 40.0 µm or less, 8.0 µm or more and 75.0 µm or less, 8.0 µm or more and 50.0 µm or less, 8.0 µm or more and 40.0 µm or less, 12.0 µm or more and 75.0 µm or less, 12.0 µm or more and 50.0 µm or less, and 12.0 µm or more and 40.0 µm or less.

In this specification, when measuring various parameters such as the thickness of a layer, the haze, and the b* value, the measurement is carried out in an atmosphere having a temperature of 23°C ± 5°C and a relative humidity of 40% or more and 65% or less, unless otherwise specified. Further, a sample is exposed to the atmosphere for 30 minutes or more and 60 minutes or less before measuring various parameters.

The first base material preferably has a resin film and a layer including a matting agent on at least one surface of the resin film, in view of making it easy to satisfy the relationship of the haze of the second base material ≤ the haze of the barrier film. Alternatively, the first base material preferably includes an internal diffusion agent in the resin film, in view of making it easy to satisfy the relationship.

As the matting agent and the internal diffusion agent, a general-purpose inorganic particle and organic particle can be used.

The barrier film may have a higher haze by increasing the content of the matting agent or internal diffusion agent, by increasing the difference in the refractive index between the matting agent or internal diffusion agent and the binder resin, or by increasing the thickness of the layer containing the matting agent or internal diffusion agent.

A surface treatment may be applied to the first base material surface on which an inorganic oxide layer is to be formed, in view of improving the close adhesion, for example. Examples of the surface treatment include corona discharge treatment, ozone treatment, low temperature plasma treatment, glow discharge treatment, and oxidation treatment. An easy-adhesive layer may be formed on the first base material surface on which the inorganic oxide layer is to be formed.

### <<Inorganic oxide layer>>

The inorganic oxide layer is required to include silicon oxide. Further, the inorganic oxide layer is required to have a thickness of 30 nm or more. Silicon oxide may be contained as the inorganic oxide constituting the inorganic oxide layer to reduce cost increase of the optical laminate. An advanced barrier property can be imparted to the optical laminate by the thickness of the inorganic oxide 30 nm or more.

The silicon oxide is an oxide including silicon. A typical example of the silicon oxide is an oxide of silicon (SiOx) such as silicon dioxide. That is, the inorganic oxide layer preferably includes oxide of silicon.

The total content of silicon and oxygen in the inorganic oxide layer is preferably 90% by mass or more, more preferably 95% by mass or more, and further preferably 99% by mass or more on a mass basis. The inorganic oxide layer may include an element other than silicon and oxygen as long as the effect of the present disclosure is not impaired.

The thickness of the inorganic oxide is preferably 40 nm or more, more preferably 50 nm or more, and further preferably 55 nm or more in view of further improving the barrier property.

If the thickness of the inorganic oxide layer is too large, a crack in the inorganic oxide layer is likely to occur. In addition, when the thickness of the inorganic oxide layer reaches a predetermined thickness, the barrier property tends to become saturated. In light of these, the thickness of the inorganic oxide layer is preferably 200 nm or less, more preferably 150 nm or less, and further preferably 120 nm or less.

The inorganic oxide layer is preferably a single layer.

The inorganic oxide layer can be formed, for example, by a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method. Among these, a vacuum vapor deposition method, which provides a high vapor deposition rate and good productivity, is preferable. The PVD method is preferable to the CVD method since the inorganic oxide layer is less likely to be contaminated with carbon.

### <<Covering layer>>

The barrier film preferably has a covering layer on the inorganic oxide layer in view of improving the barrier property.

The covering layer preferably includes one or more selected from water-soluble polymers and metal alkoxide-based compounds. Among water-soluble polymers and metal alkoxide-based compounds, the covering layer more preferably includes one or more selected from the group consisting of water-soluble polymers, and further preferably includes one or more selected from the group consisting of a water-soluble polymers and also one or more selected from the group consisting of metal alkoxide-based compounds.

Examples of the water-soluble polymer include polyvinyl alcohol, polyvinylpyrrolidone, and an ethylene-vinyl alcohol copolymer. Among these, polyvinyl alcohol and an ethylene-vinyl alcohol copolymer are preferable, and polyvinyl alcohol is more preferable, because of the barrier property. That is, the covering layer preferably includes one or more selected from the group consisting of polyvinyl alcohol and an ethylene-vinyl alcohol copolymer, and more preferably includes polyvinyl alcohol.

When the covering layer contains a water-soluble polymer and a metal alkoxide-based compound, the content of the water-soluble polymer is preferably 5 parts by mass or more and 500 parts by mass or less, more preferably 7 parts by mass or more and 100 parts by mass or less, and further preferably 8 parts by mass or more and 50 parts by mass or less, per 100 parts by mass in total of the metal alkoxide-based compound.

Examples of the metal alkoxide-based compound include a metal alkoxide, a metal alkoxide hydrolysate, and a metal alkoxide polymer.

The metal alkoxide is a compound represented by the general formula M(OR)ₙ. In the formula, M represents a metal such as Si, Ti, Al, and Zr, and R represents an alkyl group such as a methyl group and an ethyl group. Specific examples of the metal alkoxide include tetramethoxysilane, tetraethoxysilane, and isopropoxyaluminum.

A covering layer can be formed, for example, by applying a coating liquid including a component for constituting the covering layer to the inorganic oxide layer and drying the same. The coating liquid may contain an additive such as a silane coupling agent, a curing agent, or a dispersant.

The thickness of the covering layer is preferably 70 nm or more, more preferably 100 nm or more, and further preferably 150 nm or more in view of improving the barrier property.

The thickness of the covering layer is preferably 600 nm or less, more preferably 480 nm or less, more preferably 370 nm or less, and further preferably 300 nm or less. When the thickness is 600 nm or less, the optical laminate can be thin and the occurrence of a crack in the covering layer can also be easily suppressed.

For the lower limit, the haze of the barrier film is preferably 0.3% or more, more preferably 0.5% or more, and further preferably 0.8% or more, and for the upper limit, the haze is preferably 8.0% or less, more preferably 5.0% or less, and further preferably 3.0% or less. The light coming-in surface when measuring the haze of the barrier film is the surface on the side having the inorganic oxide layer with respect to the first base material.

The barrier film having a haze of 0.3% or more can make minute black dots less visible, and thus the poor display quality of a display device such as electronic paper can be easily prevented.

If the haze of the barrier film is too high, the display of a display device such as electronic paper may be blurred and hard to see. Accordingly, when the haze of the barrier film is 8.0% or less, the poor display quality of a display device such as electronic paper can be easily prevented.

The barrier film has a total light transmittance according to JIS K 7361-1:1997 of preferably 80% or more, more preferably 85% or more, and further preferably 87% or more.

The thickness of the barrier film is preferably 5.0 µm or more, more preferably 8.0 µm or more, and further preferably 12.0 µm or more. The thickness of the barrier film is preferably 75.0 µm or less, more preferably 50.0 µm or less, and further preferably 40.0 µm or less.

When the thickness of the barrier film is 5.0 µm or more, the barrier film can tend to have improved the handleability. When the thickness of the barrier film is 75.0 µm or less, display device such as electronic paper to be obtained can be thin.

The barrier film preferably has a b* value of 0.1 or more and 5.0 or less, in terms of reflected light, in the L*a*b* color system when the first base material side is a light coming-in surface. The b* value is more preferably 0.2 or more and 3.0 or less, and further preferably 0.3 or more and 2.0 or less.

The larger the b* value of the barrier film is, the larger the thickness of the inorganic oxide layer including silicon oxide tends to be. Accordingly, when the b* value of the barrier film is 0.1 or more, the barrier property can be easily improved. On the other hand, if the b* value of the barrier film is too large, minute black dots are likely to stand out. Accordingly, when the b* value of the barrier film is 5.0 or less, minute black dots can be less visible, and thus the poor display quality of a display device such as electronic paper can be easily prevented.

In this specification, the reflected light used to calculate the b* value is measured so as to include a specular reflection component based on the geometric condition d of JIS Z8722:2009.

### <Geometric condition d according to JIS Z 8722:2009>

The sample is irradiated with a single beam whose optical axis does not exceed 10° with respect to the normal line of the sample surface, and the light reflected in all directions is integrated and received. In this case, the irradiated beam must not include any beam inclined by 5° or more with respect to its center line.

The b* value of the barrier film described above is the b* value of the reflected light. The light transmitted through the barrier film reflects off the display element. For example, in the case of the barrier film for electronic paper, the light transmitted through the barrier film reflects off the display element for the electronic paper. Accordingly, when measuring the b* value of the barrier film, the measurement is carried out in consideration of the reflection of the display element. Specifically, a sample is prepared in which a standard white reflector of perfect diffusion is disposed on the barrier film surface on the opposite side from the light coming-in surface, and the b* value of the barrier film is measured using the sample.

The L*a*b* color system is based on the L*a*b* color system standardized by the International Commission on Illumination (CIE) in 1976 and is adopted in JIS Z 8781-4:2013.

### <Second base material>

Examples of the second base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, and amorphous olefin.

Among these resin films, a stretched polyester film is preferable, and a biaxially stretched polyester film is more preferable, in view of mechanical strength, dimensional stability, and heat resistance. Examples of the polyester film include a polyethylene terephthalate film and a polyethylene naphthalate film. The resin film as the second base material is preferably capable of reducing the haze.

The second base material preferably has a resin film and an anti-blocking layer including a matting agent on at least one surface of the resin film, in view of suppressing blocking. As the matting agent, a general-purpose inorganic particle and organic particle can be used.

If the haze of the second base material is too high, the display of a display device such as electronic paper may be blurred and hard to see. In light of these, the haze of the second base material is preferably 5.0% or less, more preferably 3.0% or less, and more preferably 2.5% or less.

The lower limit of the haze of the second base material is not particularly limited. In view of using a general-purpose resin film as the second base material, the haze of the second base material is preferably 0.1% or more, more preferably 0.2% or more, and more preferably 0.3% or more.

The haze of the barrier film/haze of the second base material is preferably 1.05 or more and 5.0 or less, and more preferably 1.10 or more and 3.0 or less.

When the ratio is 1.05 or more, minute black dots can be less visible, and thus the poor display quality of a display device such as electronic paper can be easily prevented. When the ratio is 5.0 or less, blurring of the display of the display device such as electronic paper can be easily suppressed, and thus the poor display quality of a display device such as electronic paper can be prevented more easily.

The thickness of the second base material is preferably 20.0 µm or more, more preferably 30.0 µm or more, and further preferably 45.0 µm or more. The thickness of the second base material is preferably 120.0 µm or less, more preferably 100.0 µm or less, and further preferably 80.0 µm or less.

When the thickness of the second base material is 20.0 µm or more, minute black dots can be less visible, and thus the poor display quality of a display device such as electronic paper can be easily suppressed. When the thickness of the second base material is 120.0 µm or less, blurring of the display of the display device such as electronic paper can be easily suppressed, and thus the poor display quality of a display device such as electronic paper can be prevented more easily. When the thickness of the second base material is 120.0 µm or less, a display device such as electronic paper to be obtained can be thin.

The thickness of the second base material/the thickness of barrier film is preferably 1.2 or more and 10.0 or less, more preferably 1.5 or more and 8.0 or less, and further preferably 2.0 or more and 5.0 or less.

When the ratio is 1.2 or more, minute black dots can be less visible, and thus the poor display quality of a display device such as electronic paper can be easily prevented. When the ratio is 10.0 or less, blurring of the display of the display device such as electronic paper can be easily suppressed, and thus the poor display quality of a display device such as electronic paper can be prevented more easily.

In this specification, each of the thicknesses of the second base material and the barrier film is an average value of the thickness at arbitrary 10 points. The thicknesses of the second base material and the barrier film can be measured by a thickness-measuring device. Examples of the thickness-measuring device include Digimatic Standard Outside Micrometer (product number: MDC-25SX) manufactured by Mitutoyo Corporation.

### <Adhesive layer>

The adhesive layer, which is positioned between the barrier film and the second base material, has the role of integrating the barrier film, the adhesive layer, and the second base material.

Examples of the adhesive constituting the adhesive layer include a moisture-curable type adhesive, a thermosetting adhesive, an ultraviolet-curable type adhesive, a heat-sensitive adhesive (for example, a hot-melt adhesive), and a pressure-sensitive adhesive. These various adhesives to be used can be general-purpose adhesives.

The adhesive layer is preferably a layer formed from a curable adhesive in view of providing satisfactory close adhesion over a long period of time. Examples of the curable adhesive include a moisture-curable type adhesive, a thermosetting adhesive, and an ultraviolet-curable type adhesive. Among these, a thermosetting adhesive and an ultraviolet-curable type adhesive are preferable, and a thermosetting adhesive is more preferable.

Examples of the thermosetting adhesive include a general-purpose one-pack curing type adhesive and two-pack curing type adhesive. Among these, a two-pack curing type polyurethane-based adhesive is preferable. The two-pack curing type polyurethane-based adhesive is an adhesive including a polyol-based compound and an isocyanate-based compound.

The thickness of the adhesive layer is preferably 2 µm or more and 30 µm or less, more preferably 3 µm or more and 20 µm or less, and further preferably 4 µm or more and 10 µm or less.

When the thickness is 2 µm or more, the close adhesion between the barrier film and the second base material can tends to be satisfactory. When the thickness is 30 µm or less, the display device such as electronic paper to be obtained can be thin, and stress due to curing shrinkage of the adhesive can also be easily suppressed.

The adhesive layer preferably has a high total light transmittance and a low haze. Accordingly, the adhesive layer is preferably free of an internal scattering agent and a visible light absorber.

### <Physical properties>

### <<Water vapor transmission rate>>

The optical laminate has a value of water vapor transmission rate according to JIS K 7129-2:2019 of preferably 0.02 g/m²·day or less and more preferably 0.01 g/m²·day or less.

The temperature and humidity conditions for measuring the water vapor transmission rate are 40°C and a relative humidity of 90%. Before measuring the water vapor transmission rate, a sample for measurement is exposed to an atmosphere having a temperature of 23°C ± 5°C and a relative humidity of 40% or more and 65% or less for 30 minutes or more and 60 minutes or less.

The water vapor transmission rate can be measured, for example, using a MOCON ultrasensitive water vapor transmittance measuring device (trade name: AQUATRAN 3) of Hitachi High-Tech Science Corporation.

### <<Oxygen transmission rate>>

The optical laminate preferably has a value of oxygen transmission rate according to JIS K 7126-2:2006 of 0.5 cc/m²·day·atm or less.

The temperature and humidity conditions for measuring the oxygen transmission rate are 23°C and a relative humidity of 90%. Before measuring the oxygen transmission rate, a sample for measurement is exposed to an atmosphere having a temperature of 23°C ± 5°C and a relative humidity of 40% or more and 65% or less for 30 minutes or more and 60 minutes or less.

The oxygen transmission rate can be measured, for example, using an oxygen transmission rate measuring device (trade name: OX-TRAN) manufactured by MOCON, Inc. (MOCON method).

### <<Total light transmittance>>

The optical laminate preferably has a total light transmittance according to JIS K 7361-1:1997 of 85% or more, more preferably 87% or more, and further preferably 89% or more.

### <Laminated configuration>

Examples of the laminated configuration of the optical laminate according to the present disclosure include the following (1) and (2). In (1) and (2) below, "/" means an interface between layers.
(1) Inorganic oxide layer/first base material/adhesive layer/second base material
(2) Covering layer/inorganic oxide layer/first base material/adhesive layer/second base material

The optical laminate of the present disclosure may have a layer other than the above as long as the effect of the present disclosure is not impaired.

The optical laminate of the present disclosure can be used for a display device such as electronic paper; a liquid crystal display device; an EL display device such as an organic EL display device and an inorganic EL display device; a plasma display device; an LED display device such as mini-LED and micro-LED display element. The liquid crystal display device includes a liquid crystal display device including a wavelength conversion sheet.

### [Display device]

The display device of the present disclosure includes the optical laminate for a display device according to the present disclosure described above.

Examples of the display device include electronic paper; a liquid crystal display device; an EL display device such as an organic EL display device and an inorganic EL display device; a plasma display device; an LED display device such as mini-LED and micro-LED display element. The liquid crystal display device includes a liquid crystal display device including a wavelength conversion sheet.

The display device of the present disclosure may be electronic paper as a display device, the electronic paper including a display element for electronic paper and the optical laminate of the present disclosure described above, wherein the display element for the electronic paper and the optical laminate for a display device are disposed such that the surface of the barrier film side of the optical laminate is on the side of the display element for electronic paper.

Fig. 2 is a cross-sectional view showing one embodiment of electronic paper 300 of the present disclosure. The electronic paper 300 in Fig. 2 includes a display element for electronic paper, 200 and the optical laminate 100 of the present disclosure. In the electronic paper 300 in Fig. 2, the display element for electronic paper 200 and the optical laminate 100 are disposed such that the surface of a barrier film 10 side of the optical laminate 100 is on the side of the display element 200.

In this specification, the "surface of the barrier film side of the optical laminate" means a surface of the optical laminate on the side having the barrier film with respect to the adhesive layer.

As the display element for electronic paper, a general-purpose display element for electronic paper can be used. The display element for electronic paper includes, for example, a back electrode base material having a back base material and a back electrode, a transparent electrode base material having a transparent base material and a transparent electrode, and a display medium layer disposed between the back electrode base material and the transparent electrode base material.

As the back electrode base material, transparent electrode base material, and display medium layer, a general-purpose back electrode base material, transparent electrode base material, and display medium layer can be used.

For example, the display medium layer can be appropriately selected according to the display method of the electronic paper. Examples of the display method of electronic paper include an electrophoretic method, a twist-ball method, a powder transfer method, a liquid crystal display method, and an electrochromic method.

The display element for electronic paper and the optical laminate of the present disclosure are preferably laminated via an adhesive layer. A general-purpose adhesive can be used as the adhesive constituting the adhesive layer.

The electronic paper of the present disclosure may include a member other than the display element for electronic paper and the optical laminate of the present disclosure. Examples of the member other than the display element for electronic paper and the optical laminate of the present disclosure include a touch screen, an antireflection film, and an antiglare film. The touch screen is preferably disposed between the display element for electronic paper and the optical laminate of the present disclosure. The antireflection film and the antiglare film are preferably disposed on the opposite side of the optical laminate of the present disclosure from the display element for electronic paper.

The display device of the present disclosure may be a liquid crystal display device as a display device, wherein the liquid crystal display device includes a backlight and a liquid crystal display element; the backlight includes at least one light source that emits primary light, an optical plate that is disposed adjacent to the light source and is for light guiding or diffusion, and a wavelength conversion sheet disposed on a light going-out side of the optical plate; and the wavelength conversion sheet includes the optical laminate for a display device.

A general-purpose liquid crystal display element and backlight can be used. In addition, a general-purpose light source and optical plate can be used to constitute the backlight.

Examples of the wavelength conversion sheet included in the backlight include a sheet including a first protective film for a quantum dot, a quantum dot-containing layer, and a second protective film for a quantum dot in this order. In such a wavelength conversion sheet, at least one of the first protective film for a quantum dot or the second protective film for a quantum dot is preferably the optical laminate for a display device according to the present disclosure. In the wavelength conversion sheet, the optical laminate is preferably disposed such that the surface of the barrier film side of the optical laminate is on the quantum dot-containing layer side.

As the quantum dot-containing layer, a general-purpose quantum dot-containing layer can be used. Of the first protective film for quantum dots and the second protective film for quantum dots, the protective film for which the optical laminate of the present disclosure is not used may be a general-purpose protective film.

The present disclosure includes the following <1> to <9>.
<1> An optical laminate for a display device, comprising: a barrier film comprising a first base material and an inorganic oxide layer on the first base material; and a second base material, wherein
   the barrier film and the second base material are laminated via an adhesive layer present between the first base material side of the barrier film and the second base material,
   the inorganic oxide layer comprises silicon oxide and has a thickness of 30 nm or more,
   a haze of the second base material and a haze of the barrier film satisfies the relationship of the haze of the second base material ≤ the haze of the barrier film, and
   a thickness of the barrier film and a thickness of the second base material satisfies the relationship of the thickness of the barrier film ≤ the thickness of the second base material.
<2> The optical laminate for a display device according to <1>, wherein the haze of the barrier film is 0.3% or more and 8.0% or less.
<3> The optical laminate for a display device according to <1> or <2>, wherein the haze of the second base material is 0.1% or more and 5.0% or less.
<4> The optical laminate for a display device according to any one of <1> to <3>, wherein the thickness of the barrier film is 5.0 µm or more and 75.0 µm or less.
<5> The optical laminate for a display device according to any one of <1> to <4>, wherein the thickness of the second base material is 20.0 µm or more and 120.0 µm or less.
<6> The optical laminate for a display device according to any one of <1> to <5>, wherein the barrier film comprises a covering layer on the inorganic oxide layer.
<7> The optical laminate for a display device according to any one of <1> to <6>, wherein the barrier film has a b* value of 0.1 or more and 5.0 or less, in terms of reflected light, in a L*a*b* color system when the first base material side is a light coming-in surface.
<8> A display device comprising the optical laminate for a display device according to any one of <1> to <7>.
<9> The display device according to <8>, wherein the display device is electronic paper,
   the electronic paper comprises a display element for electronic paper and the optical laminate for a display device, wherein the display element for the electronic paper and the optical laminate for a display device are disposed such that the surface of the barrier film side of the optical laminate for a display device is on the side of the display element for electronic paper.

### Examples

Next, the present disclosure will be described in more detail by way of Examples, but the present disclosure is not limited to these Examples at all. "Parts" and "%" are by mass unless otherwise specified.

### 1. Measurements and evaluations

The following measurements and evaluations were carried out on the optical laminates for a display device according to Examples and Comparative Examples, and barrier films and second base materials constituting the optical laminates. Results thereof are shown in Table 1.

The evaluations or measurements of 1-1 to 1-4 were carried out in an atmosphere having a temperature of 23°C ± 5°C and a relative humidity of 40% or more and 65% or less. Each sample was exposed to the atmosphere for 30 minutes or more and 60 minutes or less before the evaluation or the measurement.

### 1-1: Display quality of electronic paper

A white film (haze: 30.0%) was provided as a pseudo-display element for electronic paper. A black dot having a diameter of about 100 µm was drawn with a black pen on the surface of the barrier film side of the optical laminate of Examples and Comparative Examples. The black dot was regarded as a black dot appearing in the inorganic oxide layer.

An optical laminate on which black dots were drawn was superimposed on a white film to prepare a sample for evaluation. The optical laminate was disposed such that the surface on the barrier film side faced a side of the white film.

The sample was visually observed from a distance of 30 cm in a bright room environment to visually evaluate whether or not the black dot was clearly visible. The evaluators were 20 healthy people in their 20s to 30s and ranked the sample according to the following criteria.

### <Rank criteria>

A: 2 or less people answered that the black dot was clearly visible.
B: 3 or more and 5 or less people answered that the black dot was clearly visible.
C: 6 or more and 10 or less people answered that the black dot was clearly visible.
D: 11 or more people answered that the black dot was clearly visible.

### 1-2. Haze

The haze of the barrier film and the second base material constituting each of the optical laminates of Examples and Comparative Examples was measured using a haze meter (trade name: HM-150, manufactured by Murakami Color Research Laboratory Co., Ltd.). The light coming-in surface when measuring the haze of the barrier film was the surface of the covering layer side.

### 1-3. b* value

A sample was prepared in which a standard white reflector of perfect diffusion was disposed on the barrier film surface on the covering layer side of each of the optical laminates of Example and Comparative Example. The b* value, in terms of the reflected light, of the sample in the L*a*b* color system was measured on the surface of the sample on the first base material side as a light coming-in surface. As the measuring device, a spectrophotometer (trade name: V670) manufactured by JASCO Corporation was used, and the following were used as an accessory unit and others.
- Accessory unit: Integrating sphere unit (product number: ISN-723, manufactured by JASCO Corporation)
- Light source: deuterium lamp (190 to 350 nm), halogen lamp (330 to 2700 nm)
- Measurement spot diameter: 2 mm

### 1-4. Total light transmittance

The total light transmittance of each of the optical laminates of the Examples and the Comparative Examples was measured. As the measuring device, a haze meter (HM-150, manufactured by Murakami Color Research Laboratory Co., Ltd.) was used. The light coming-in surface was the surface of the second base material side of the optical laminate. A sample having a total light transmittance of 85% or more is at an acceptable level.

### 1-5. Water vapor transmission rate

A value of the water vapor transmission rate of each of the optical laminates of the Examples and the Comparative Examples was measured in accordance with JIS K 7129-2:2019. As the measuring device, a MOCON ultrasensitive water vapor transmittance measuring device (trade name: AQUATRAN 3) of Hitachi High-Tech Science Corporation was used. The temperature and humidity conditions for measuring the water vapor transmission rate were 40°C and a relative humidity of 90%. Before measuring the water vapor transmission rate, a sample for measurement was exposed to an atmosphere having a temperature of 23°C ± 5°C and a relative humidity of 40% or more and 65% or less for 30 minutes or more and 60 minutes or less. A sample having a water vapor transmission rate of 0.02 g/m²·day or less is at an acceptable level.

### 2. Preparation of optical laminate for display device

### [Example 1]

A layer including a matting agent formed on one surface of a biaxially stretched PET film was provided as the first base material. In the first base material, the thickness of the biaxially stretched PET film was 22 µm, the thickness of the layer containing the matting agent was 1 µm, and the total thickness was 23 µm. The first base material had a haze of 1.5%.

Silicon oxide (SiO₂) was vapor-deposited on the surface of the first base material on the side having no layer containing a matting agent by a vacuum vapor deposition method to form an inorganic oxide layer (thickness: 70 nm).

Next, the coating liquid for covering layer formation, which will be described below, was applied onto the inorganic oxide layer by gravure printing and heat-treated at 180°C for 60 seconds to form a covering layer having a thickness of 300 nm, thereby obtaining a barrier film used in Example 1.

Next, a two-pack curing type polyurethane-based adhesive was applied onto one surface of a second base material (material: biaxially stretched PET film, thickness: 75 µm, haze: 0.8%) by gravure printing and dried to form an adhesive layer having a thickness of 7 µm, thereby obtaining a laminate having the adhesive layer on the second base material. Next, the surface of the laminate on the adhesive layer side and the surface of the barrier film on the first base material side faced each other, and then the laminate and the barrier film were dry-laminated to obtain an optical laminate for a display device of Example 1.

### <Preparation of coating liquid for covering layer formation>

Water, isopropyl alcohol, and 0.5 N hydrochloric acid were mixed together to obtain a solution (pH 2.2), and tetraethoxysilane was mixed with the solution while cooling to 10°C, to thereby prepare solution A. Separately, polyvinyl alcohol having a saponification value of 99% or more and isopropyl alcohol were mixed to thereby prepare solution B. Solution A and solution B were mixed to prepare a coating liquid for covering layer formation (solid content: 5% by mass). The mass ratio of tetraethoxysilane to polyvinyl alcohol in the coating liquid for covering layer formation is 29:4.

### [Comparative Example 1]

The first base material was changed to a biaxially stretched PET film (thickness: 75 µm, haze: 0.8%, second base material of Example 1). The second base material was changed to a biaxially stretched PET film (thickness: 23 µm, haze: 1.5%, first base material of Example 1). An optical laminate for a display device of Comparative Example 1 was obtained in the same manner as in Example 1 except for the above-described changes.

The thicknesses of the inorganic oxide layer and the covering layer of the barrier films of Comparative Examples 1 to 6 were the same as the thicknesses of the inorganic oxide layer and the covering layer of the barrier film of Example 1.

### [Example 2]

A layer including a matting agent formed on one surface of a biaxially stretched PET film was provided as the first base material. In the first base material, the thickness of the biaxially stretched PET film was 22 µm, the thickness of the layer containing the matting agent was 3 µm, and the total thickness was 25 µm. The first base material had a haze of 2.6%. The first base material of Example 2 had a greater haze than the first base material of Example 1 due to the greater surface unevenness of a matte layer. A biaxially stretched PET film (thickness: 75 µm, haze: 0.9%) was provided as a second base material. An optical laminate for a display device of Example 2 was obtained in the same manner as in Example 1 except that the above-described materials were used as the first base material and the second base material.

The thicknesses of the inorganic oxide layer and the covering layer in each of Examples 2 and 3 were the same as the thicknesses of the inorganic oxide layer and the covering layer of the barrier film of Example 1.

### [Example 3]

A biaxially stretched PET film (thickness: 50 µm, haze: 1.0%) was provided as a first base material. A biaxially stretched PET film (thickness: 75 µm, haze: 0.9%) was provided as a second base material. An optical laminate for a display device of Example 3 was obtained in the same manner as in Example 1 except that the above-described materials were used as the first base material and the second base material.

### [Example 4]

A barrier film used in Example 4 was obtained in the same manner as in Example 1 except that the thickness of the inorganic oxide layer was changed to 40 nm. An optical laminate for a display device of Example 4 was obtained in the same manner as in Example 1 except that the above-described material was used as the barrier film.

### [Example 5]

A barrier film used in Example 5 was obtained in the same manner as in Example 2 except that the thickness of the inorganic oxide layer was changed to 100 nm. A biaxially stretched PET film (thickness: 50 µm, haze: 2.1%) including a particle was provided as a second base material. An optical laminate for a display device of Example 5 was obtained in the same manner as in Example 1 except that the above-described materials were used as the barrier film and the second base material.

### [Example 6]

A biaxially stretched PET film (thickness: 50 µm, haze: 1.0%) was provided as a second base material. An optical laminate for a display device of Example 6 was obtained in the same manner as in Example 1 except that the above-described material was used as the second base material.

### [Example 7]

A biaxially stretched PET film (thickness: 100 µm, haze: 1.1%) was provided as a second base material. An optical laminate for a display device of Example 7 was obtained in the same manner as in Example 1 except that the above-described material was used as the second base material.

### [Comparative Example 2]

A biaxially stretched PET film (thickness: 23 µm, haze: 0.3%) was provided as a first base material. A biaxially stretched PET film (thickness: 75 µm, haze: 1.2%) was provided as a second base material. An optical laminate for a display device of Comparative Example 2 was obtained in the same manner as in Example 1 except that the above-described materials were used as the first base material and the second base material.

### [Comparative Example 3]

A biaxially stretched PET film (thickness: 23 µm, haze: 0.9%) was provided as a first base material. A biaxially stretched PET film (thickness: 50 µm, haze: 1.0%) was provided as a second base material. An optical laminate for a display device of Comparative Example 3 was obtained in the same manner as in Example 1 except that the above-described materials were used as the first base material and the second base material.

### [Comparative Example 4]

A biaxially stretched PET film (thickness: 23 µm, haze: 0.9%) was provided as a first base material. A biaxially stretched PET film (thickness: 50 µm, haze: 2.8%) including a particle was provided as a second base material. An optical laminate for a display device of Comparative Example 4 was obtained in the same manner as in Example 1 except that the above-described materials were used as the first base material and the second base material.

### [Comparative Example 5]

A biaxially stretched PET film (thickness: 50 µm, haze: 1.0%) was provided as a first base material. A biaxially stretched PET film (thickness: 23 µm, haze: 1.1%) was provided as a second base material. An optical laminate for a display device of Comparative Example 5 was obtained in the same manner as in Example 1 except that the above-described materials were used as the first base material and the second base material.

### [Comparative Example 6]

A biaxially stretched PET film (thickness: 23 µm, haze: 0.3%) was provided as a first base material. A biaxially stretched PET film (thickness: 23 µm, haze: 1.1%) was provided as a second base material. An optical laminate for a display device of Comparative Example 6 was obtained in the same manner as in Example 1 except that the above-described materials were used as the first base material and the second base material.

### [Comparative Example 7]

A barrier film used in Comparative Example 7 was obtained in the same manner as in Example 1 except that the thickness of the inorganic oxide layer was changed to 40 nm. A biaxially stretched PET film (thickness: 50 µm, haze: 2.8%) including a particle was provided as a second base material. An optical laminate for a display device of Comparative Example 7 was obtained in the same manner as in Example 1 except that the above-described materials were used as the barrier film and the second base material.

**[Table 1]**

| | | Example | | | | | | | Comparative Example | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Haze [%] | Barrier film | 1.5 | 2.6 | 1.0 | 1.4 | 2.7 | 1.5 | 1.5 | 0.8 | 0.3 | 0.9 | 0.9 | 1.0 | 0.3 | 1.4 |
| | Second base material | 0.8 | 0.9 | 0.9 | 0.8 | 2.1 | 1.0 | 1.1 | 1.5 | 1.2 | 1.0 | 2.8 | 1.1 | 1.1 | 2.8 |
| Thickness [µm] | Barrier film | 23.37 | 25.37 | 50.37 | 23.37 | 23.37 | 23.37 | 23.37 | 75.37 | 23.37 | 23.37 | 23.37 | 50.37 | 23.37 | 23.37 |
| | Second base material | 75 | 75 | 75 | 75 | 50 | 50 | 100 | 23 | 75 | 50 | 50 | 23 | 23 | 50 |
| b* value of barrier film | | 1.0 | 1.3 | 1.1 | 0.7 | 1.2 | 1.0 | 1.0 | 1.0 | 0.7 | 1.0 | 1.0 | 1.1 | 0.7 | 0.8 |
| Total light transmittance of optical laminate [%] | | 90.7 | 90.5 | 90.5 | 90.8 | 88.6 | 90.5 | 90.4 | 91.1 | 91.5 | 90.6 | 88.4 | 91.6 | 91.9 | 89.0 |
| Water vapor transmission rate of optical laminate [g/m²·day] | | 0.005 | 0.010 | 0.005 | 0.010 | 0.005 | 0.005 | 0.005 | 0.005 | 0.005 | 0.005 | 0.005 | 0.005 | 0.005 | 0.010 |
| Display quality | | A | A | B | A | A | A | A | C | D | D | C | D | D | C |

From the results in Table 1, it can be confirmed that the optical laminates for a display device according to Examples can prevent poor display quality while exhibiting better barrier properties.

### Reference Signs List

10: Barrier film
11: First base material
12: Inorganic oxide layer
13: Covering layer
20: Adhesive layer
30: Second base material
100: Optical laminate for a display device
200: Display element for electronic paper
300: Electronic paper

## Claims

1. An optical laminate for a display device, comprising: a barrier film comprising a first base material and an inorganic oxide layer on the first base material; and a second base material, wherein
the barrier film and the second base material are laminated via an adhesive layer present between the first base material side of the barrier film and the second base material,
the inorganic oxide layer comprises silicon oxide and has a thickness of 30 nm or more,
a haze of the second base material and a haze of the barrier film satisfies the relationship of the haze of the second base material ≤ the haze of the barrier film, and
a thickness of the barrier film and a thickness of the second base material satisfies the relationship of the thickness of the barrier film ≤ the thickness of the second base material.

2. The optical laminate for a display device according to claim 1, wherein the haze of the barrier film is 0.3% or more and 8.0% or less.

3. The optical laminate for a display device according to claim 1, wherein the haze of the second base material is 0.1% or more and 5.0% or less.

4. The optical laminate for a display device according to claim 1, wherein the thickness of the barrier film is 5.0 µm or more and 75.0 µm or less.

5. The optical laminate for a display device according to claim 1, wherein the thickness of the second base material is 20.0 µm or more and 120.0 µm or less.

6. The optical laminate for a display device according to claim 1, wherein the barrier film comprises a covering layer on the inorganic oxide layer.

7. The optical laminate for a display device according to claim 1, wherein the barrier film has a b* value of 0.1 or more and 5.0 or less, in terms of reflected light, in a L*a*b* color system when the first base material side is a light coming-in surface.

8. A display device comprising the optical laminate for a display device according to any one of claims 1 to 7.

9. The display device according to claim 8, wherein the display device is electronic paper,
the electronic paper comprises a display element for electronic paper and the optical laminate for a display device, wherein the display element for the electronic paper and the optical laminate for a display device are disposed such that the surface of the barrier film side of the optical laminate for a display device is on the side of the display element for electronic paper.
